# EUROPÄISCHE PATENTSCHRIFT

(11) **EP 2 381 389 B1**
(45) Veröffentlichungstag und Bekanntmachung des Hinweises auf die Patenterteilung: **25.02.2015**
(21) Anmeldenummer: 11162189.2
(22) Anmeldetag: 13.04.2011
(51) Int. Cl.: G06K 7/00, G06K 7/10

(54) **Verfahren zum gleichzeitigen Betrieb einer Schreib-/Lesestation eines RFID-Systems und eines Frequenzduplexsystems**
Method for simultaneous operation of a read/write station of a RFID system and a frequency duplex system
Procédé de fonctionnement simultané d'une station d'écriture/lecture d'un système RFID et d'un système en duplex de fréquence

(30) Priorität: 14.04.2010 DE 102010016445
(43) Veröffentlichungstag der Anmeldung: 26.10.2011
(73) Patentinhaber: Feig Electronic GmbH, 35781 Weilburg (DE)
(72) Erfinder: Desch, Markus, 65527 Niedernhausen (DE)
(74) Vertreter: Knefel, Cordula

(56) Entgegenhaltungen:
- EP-A1- 1 619 601
- EP-A2- 1 772 813
- EP-A2- 1 928 098
- US-A1- 2009 058 612

## Beschreibung

Die Erfindung betrifft ein Verfahren zum gleichzeitigen Betrieb einer Schreib-/Lesestation eines RFID-Systems und eines Frequenzduplexsystems.

Die Schreib-/Lesestation des RFID-Systems verwendet wenigstens einen Kanal zur Kommunikation zwischen einer RFID-Schreib-/Lesestation und wenigstens einem Transponder.

Insbesondere betrifft die Erfindung ein Verfahren für den Betrieb einer RFID-Schreib-/Lesestation, die in einem Frequenzband mit mehreren Sendekanälen in Koexistenz mit einem oder mehreren anderen Funksystemen arbeiten kann, wobei die anderen Funksysteme primär so genannte Frequenzduplexsysteme sind, die jeweils ein Frequenzband mit mehreren Kanälen für die Datenhinübertragung (Hinband) und ein weiteres Frequenzband mit mehreren Kanälen für die Datenrückübertragung (Rückband) nutzen.

Aus der Praxis ist bekannt, für Funksysteme Frequenzbänder zu definieren, welche durch eine untere und eine obere Frequenz bestimmt sind. Um den Parallelbetrieb mehrerer gleichartiger Funksysteme zu ermöglichen, wird ein Frequenzband in eine Mehrzahl von Kanälen unterteilt, wobei jeder Kanal wiederum durch eine untere Grenzfrequenz fu und eine obere Grenzfrequenz fo definiert ist. Wird ein Sender auf einen so definierten Kanal eingestellt, so bedeutet dies, dass seine Sendefrequenz in einem Bereich nahe der Mitte zwischen den Kanalgrenzen fu und fo des Kanales eingestellt wird, in dem er arbeiten soll. Diese Frequenz wird als Mittenfrequenz fc des Kanales bezeichnet. In den meisten Fällen ist die Mittenfrequenz auch gleichzeitig die Trägerfrequenz, die zur Informationsübertragung moduliert wird.

Ein RFID-System besteht gemäß dem Stand der Technik aus einer RFID-Schreib-/Lesestation, an die eine RFID-Antenne angeschlossen ist, wobei die RFID-Antenne auch eine bauliche Einheit mit der RFID-Schreib-/Lesestation bilden kann und die dazu dient, Sendesignale und Energie zu emittieren und Antwortsignale zu empfangen.

Eine RFID-Schreib-/Lesestation weist üblicherweise eine Sendevorrichtung auf, über die sie eine Trägerfrequenz in einem definierten Frequenzband erzeugen kann und über die sie in der Lage ist, kodierte Daten zu senden, indem die Trägerfrequenz mit einer definierten Kodierung moduliert wird. Für die Modulation der Trägerfrequenz ist eine Vielzahl unterschiedlicher Verfahren, wie beispielsweise Amplitude Shift Keying (ASK), Phase-Reversed Amplitude Shift Keying (PR-ASK), Frequenzy Shift Keying (FSK), Phase Shift Keying (PSK) bekannt. Auch die Kodierung der Daten kann in unterschiedlicher Art, wie beispielsweise NRZ-Code, Manchester-Code, Miller-Code oder Differential Biphase Code erfolgen. Ferner weist eine RFID-Schreib-/Lesestation eine Empfangsvorrichtung auf, über die sie aus den Empfangssignalen Antwortdaten eines Transponders demodulieren kann. Die Empfangsvorrichtung einer RFID-Schreib-/Lesestation kann abhängig von dem Frequenzbereich und den Anforderungen an das RFID-System sehr unterschiedlich ausgeführt sein. Es werden beispielsweise einfache Dioden-Demodulatoren oder komplexe Quadratur-Empfänger eingesetzt. Ferner weist eine RFID-Schreib-/Lesestation nach dem Stand der Technik eine Steuer- und Auswerteeinheit auf, in der die zu sendenden Daten für die Kodierung aufbereitet werden und die empfangenen Daten dekodiert und ausgewertet werden können.

Passive Transponder bestehen gemäß dem Stand der Technik aus einem integrierten Mikroelektronikbauelement (IC) und einer Antenne. Gelangt ein Transponder in den Erfassungsbereich der RFID-Antenne, so wird der Transponder mit elektrischer Energie zum Betrieb der integrierten Schaltung (IC) versorgt und kann Daten empfangen und Daten an die RFID-Antenne senden. Wenn der RFID-Transponder Daten zur RFID-Schreib-/Lesestation überträgt, moduliert der Transponder die Trägerfrequenz der RFID-Schreib-/Lesestation.

Da bei einem RFID-System zur Übertragung der Daten von der RFID-Schreib-/Lesestation zum Transponder und zur Übertragung der Daten vom Transponder zur RFID-Schreib-/Lesestation nur eine Trägerfrequenz benutzt wird, können nie zeitgleich Daten von der RFID-Schreib-/Lesestation zum Transponder und Daten vom Transponder zur RFID-Schreib-/Lesestation übertragen werden. Da zur Datenübertragung zwischen RFID-Schreib-/Lesestation und Transponder und zwischen Transponder und RFID-Schreib/Lesestation immer nur ein Kanal zum Senden der Trägerfrequenz verwendet wird und der Datenaustausch immer nur in eine Richtung erfolgen kann, handelt es sich bei einem RFID-System im Sinne der Nachrichtentechnik um ein Simplex-System. Bei einem Simplex-System gilt, dass ein Informationstransfer über einen Kanal zu einem Zeitpunkt jeweils nur in einer Richtung erfolgen kann.

Ein RFID-System besteht aus RFID-Schreib-/Lesestation, RFID-Antenne und mindestens einem RFID-Transponder und stellt dabei im Prinzip eine besondere Art eines Funksystems dar.

Im Gegensatz zum Simplex-System gibt es Vollduplexsysteme, die die Übertragung der Informationen auf zwei Kanälen zu gleicher Zeit zulassen. Im Folgenden wird ein Frequenzduplex- (englisch: frequency division duplex, FDD) System beschrieben, welches Informationen für jede Richtung mit Hilfe einer anderen Trägerfrequenz überträgt und es so ermöglicht, dass ein Gerät gleichzeitig senden und empfangen kann. Frequenzduplex wird unter anderem im Mobilfunk (GSM: Global System for Mobile Communications) eingesetzt. Zusätzlich wird zum Frequenzduplex in GSM-Systemen auch das zeitmultiplexverfahren (TDMA) eingesetzt.

Zum Betrieb eines Frequenzduplexsystems werden diesem zwei unabhängige Frequenzbänder zugeteilt, wobei in einem Frequenzband alle Hinkanäle liegen (Hinfrequenzband) und in dem anderen Frequenzband alle Rückkanäle (Rückfrequenzband) liegen. Ein Frequenzduplexsystem weist typischerweise die gleiche Anzahl Hinkanäle und Rückkanäle auf, wobei zwischen dem Frequenzband der Hinkanäle und dem Frequenzband der Rückkanäle ein Duplexabstand besteht. Unter Duplexabstand versteht man einen Frequenzabstand zwischen einem Hinkanal und dem Rückkanal. Der Frequenzabstand zwischen einem Hinkanal im Hinfrequenzband und dem zugeordneten Rückkanal im Rückfrequenzband ist somit jeweils gleich groß.

Technische Standards, wie sie beispielsweise unter Führung der ETSI (European Telecommunications Standards Institute) oder der CEPT (Conference Européenne des Administrations des Postes et des Telecommunications) erarbeitet werden, definieren dabei neben den Frequenzbändern und den Hinkanälen und Rückkanälen auch die Sendeleistung und die Empfindlichkeit der Empfänger von stationären Basisstationen und mobilen Sende-/Empfangseinheiten unterschiedlicher Frequenzduplexsystemen, wie beispielsweise P-GSM (Primary GSM), E-GSM: (Extended GSM), GSM-R: (Railways GSM).

Aus der Praxis bekannte Verfahren versuchen, die Störungen zwischen Funksystemen dadurch zu vermeiden, dass sie die Frequenz, auf der sie senden möchten, abhören und den Empfangspegel ermitteln und einen Sendevorgang nur beginnen, wenn der Empfangspegel auf diesem Kanal einen zuvor definierten Schwellwert unterschreitet. Dieses zum Stand der Technik zählende Verfahren ist unter dem Begriff "listen before talk" bekannt. Der Schwellwert wird meist aus der Empfindlichkeit des Empfängers, der nicht gestört werden soll, bestimmt. Hat ein Funksystem einen sehr empfindlichen Empfänger und einen Sender, der mit großer Leistung sendet, hat dies nach den bekannten Verfahren zur Folge, dass ein zweites Funksystem, welches die gleiche Frequenz nutzen will, einen sehr großen Abstand zum Sender des nicht zu störenden Systems einhalten muss. Der sich ergebende große Abstand macht es dann fast unmöglich für ein weiteres Funksystem, im Bereich eines Frequenzduplexsystems, welches mit vielen räumlich verteilten Zellen aufgebaut ist, einen freien Kanal zu finden.

Diese aus der Praxis bekannten Systeme, die einen Empfangspegel auf dem Kanal prüfen, auf dem sie selbst senden wollen, haben in Verbindung mit Frequenzduplexsystemen den Nachteil, dass sie lediglich prüfen können, ob der gewünschte Sendekanal durch ein anderes System belegt ist. Sie können aber nicht feststellen, ob sie die Datenübertragung eines Frequenzduplexsystems aufgrund der räumlichen Anordnung der Sende-/Empfangsstationen wirklich stören würden. So kann es beispielsweise sein, dass eine Schreib-/Lesestation in der Nähe einer ersten Sende-/Empfangseinheit eines Frequenzduplexsystems angeordnet ist und deshalb einen hohen Signalpegel des Hinkanales der ersten Sende-/ Empfangseinheit empfängt. Der Kommunikationspartner (zweite Sende-/Empfangseinheit) dieser ersten Sende-/Empfangseinheit kann aber räumlich so angeordnet sein, dass er durch das Sendesignal, welches die Schreib-/Lesestation auf demselben Hinkanal aussendet, nicht gestört würde, weil der Abstand zwischen Schreib-/Lesestation und zweiter Sende-/ Empfangseinheit ausreichend groß ist.

Zum Stand der Technik (EP 1 619 601 A1) gehört ein Verfahren, mit dem eine Schreib-/Lesestation möglichst schnell und ohne Störung einer weiteren Schreib-/Lesestation einen freien Sendekanal ermitteln kann. Dazu kann die Bandbreite des Empfängers der Schreib-/Lesestation derart gewählt werden, dass der Belegt-Zustand mehrerer Kanäle gleichzeitig überprüft werden kann.

Weiterhin gehört zum Stand der Technik (EP 1 772 813 A2) ein Verfahren, mit dem ein Frequenzband von mehreren Schreib-/Lesestationen eines RFID-Systems möglichst optimal ausgenutzt werden kann. Gemäß dieser Druckschrift ist ein Verfahren offenbart, gemäß dem die Sendevorgänge von in räumlicher Nähe angeordneten stationären oder mobilen Schreib-/Lesestationen eines RFID-Systems ohne ein zusätzliches Netzwerk synchronisiert werden und einen gemeinsamen Sendekanal nutzen können, bei dem jedoch gleichzeitig auch sichergestellt ist, dass die Schreib-/Lesestation mindestens für eine vorgeschriebene Zeitspanne (listen window) gleichzeitig nicht senden und der Sendevorgang nach Eintritt eines externen Ereignisses (Triggerimpuls) möglichst schnell beginnt.

Weiterhin gehört zum Stand der Technik (US 2009/0058612 A1) ein Verfahren, gemäß dem mehrere Schreib-/Lesestationen in einem Frequenzband betrieben werden können, ohne sich gegenseitig zu stören. Hierzu wird vorgeschlagen, eine zentrale Kontrolleinheit vorzusehen, die den einzelnen Schreib-/Lesestationen eines RFID-Systems jeweils einen Sendekanal für eine gewisse Dauer zuweist.

Zum Stand der Technik (EP 1 928 098 A2) gehört darüber hinaus eine Schreib-/Lesestation sowie dessen Empfänger, mit dem es möglich ist festzustellen, ob ein bestimmter Kanal frei oder belegt ist.

Das der Erfindung zugrunde liegende technische Problem besteht darin, ein Verfahren anzugeben, mit dem ein Frequenzduplexsystem und ein RFID-System in relativer räumlicher Nähe zueinander betrieben werden können und dabei dieselben Frequenzbänder nutzen können. Eine räumliche Nähe kann beispielsweise die typische Größe einer Funkzelle eines Frequenzduplexsystems, wie beispielsweise eines GSM-Systems, sein, die je nach Ausprägung des Systems einen Radius zwischen 500 Metern und 30 Kilometern betragen kann.

Das erfindungsgemäße Verfahren zum gleichzeitigen Betrieb einer Schreib-/Lesestation eines RFID-Systems und eines Frequenzduplexsystems in demselben Frequenzband, bei dem die Schreib-/Lesestation des RFID-Systems wenigstens eine Frequenz f1 zur Kommunikation zwischen einer RFID-Schreib-/Lesestation und wenigstens einem Transponder verwendet in Sendereichweite der Schreib-/Lesestation zu einer Sende-/Empfangseinheit des Frequenzduplexsystems, welches wenigstens eine erste Frequenz f1 und eine der ersten Frequenz f1 in einem bekannten Frequenzabstand zugeordnete zweite Frequenz f2 verwendet, und bei dem die Sendeleistung und die Empfangsempfindlichkeit der Sende-/Empfangseinheit bekannt ist, wobei eine erste Frequenz f1 zur Datenübertragung von einer ersten Sende-/Empfangseinheit zu einer zweiten Sende-/Empfangseinheit (Hinkanal) und die zweite Frequenz f2 zur Datenübertragung von einer zweiten Sende-/Empfangseinheit zu einer ersten Sende-/Empfangseinheit (Rückkanal) verwendet wird, zeichnet sich dadurch aus, dass die Schreib-/Lesestation des RFID-Systems den Empfangspegel von wenigstens jeweils der zweiten Frequenz f2 des Frequenzduplexsystems auswertet für eine Überprüfung, ob das RFID-System die Frequenz f1 zur Kommunikation verwenden kann.

Das erfindungsgemäße Verfahren ermöglicht es einer Schreib-/Lesestation, die Sendekanäle so zu wählen, dass Störungen eines Frequenzduplexsystems vermieden werden.

Ausschlaggebend für einen störungsfreien Parallelbetrieb eines RFID-Systems und eines Frequenzduplexsystems in relativer räumlicher Nähe in demselben Frequenzband ist dabei, dass das Sendesignal einer Scheib-/Lesestation des RFID-Systems an einer Sende-/Empfangseinheit eines Frequenzduplexsystems einen Empfangspegel annimmt, der unterhalb der Störschwelle des Empfängers der Sende-/Empfangseinheit liegt. Ob die Störschwelle überschritten wird, ist dabei abhängig von der Sendeleistung des RFID-Systems, der Empfangsempfindlichkeit der Sende-/Empfangseinheit des Frequenzduplexsystems und dem räumlichen Abstand zwischen RFID-Schreib-/Lesestation und Sende-/Empfangseinheit des Frequenzduplexsystems und wird nachfolgend als Sendereichweite der Schreib-/Lesestation bezeichnet. Bei dieser Sendereichweite handelt es sich um eine relative Sendereichweite, die abhängig von den oben genannten Parametern ist.

Gemäß der Erfindung wird lediglich der Empfangspegel der zweiten Frequenz f2 von der RFID-Schreib-/Lesestation ausgewertet. Die Frequenz f1 wird für die Auswertung nicht mehr herangezogen.

Dadurch, dass erfindungsgemäß vorgesehen ist, den Pegel des Rückkanales des Frequenzduplexsystems mit der Frequenz f2, der von den Sende-/Empfangseinheiten des Frequenzduplexsystems emittiert wird, zu analysieren, ist die Schreib-/Lesestation des RFID-Systems in der Lage, die Sende-/Empfangseinheit des Frequenzduplexsystems zu erkennen, die sie durch ihren eigenen Sendevorgang stören würde.

Würde die Schreib-/Lesestation hingegen, so wie es aus dem Stand der Technik bekannt ist, den Empfangspegel der von der Sende-/Empfangseinheit des Frequenzduplexsystems emittierten Frequenz f1 ermitteln, würde dieser unterhalb des Schwellwertes liegen, der eine Belegung des Kanales anzeigen würde, und sie würde ihren Sendebetrieb auf der Frequenz starten, ohne dass sie feststellen könnte, dass sie die Kommunikation zwischen den Sende-/Empfangseinheiten des Frequenzduplexsystems stört.

Erfindungsgemäß ist also vorgesehen, dass die Schreib-/Lesestation eines RFID-Systems den Pegel ermittelt, mit dem sie den Rückkanal eines Frequenzduplexsystems empfängt, der dem Hinkanal zugeordnet ist, auf dem die Schreib-/Lesestation selbst senden möchte oder bereits sendet. Das bedeutet, dass überprüft wird, ob die Schreib-/Lesestation des RFID-Systems die Frequenz f1 für die folgende Kommunikation mit einem Transponder verwenden kann, oder ob die Schreib-/Lesestation, wenn sie schon auf dem Kanal sendet, die Kommunikation fortsetzen kann.

Das erfindungsgemäße Verfahren macht sich dabei zu Nutze, dass der Schreib-/Lesestation sowohl der Frequenzabstand zwischen einem Hinkanal und einem Rückkanal eines Frequenzduplexsystems als auch die Sendeleistung einer Sendeeinheit und die Empfangsempfindlichkeit einer Empfangseinheit eines Frequenzduplexsystems bekannt ist, da diese Daten in den technischen Standards für die jeweiligen Frequenzbänder definiert sind.

Aus Sicht der effektiven Frequenznutzung ist es von Vorteil, wenn die Schreib-/Lesestationen von RFID-Systemen und Sende-/Empfangseinheiten von Frequenzduplexsystemen in räumlicher Nähe zueinander betrieben werden können. Dazu ist es gemäß der Erfindung vorgesehen, dass eine Schreib-/Lesestation eines RFID-Systems ihre Sendekanäle so wählt, dass die Empfangseinheiten der Frequenzduplexsysteme nur insoweit beeinflusst werden, dass ein Empfang eines Nutzsignals weiterhin möglich ist. Die Erfindung berücksichtigt auch, dass ein Frequenzduplexsystem, wie beispielsweise GSM, viele räumlich verteilte und mobile Sende-/Empfangseinheiten aufweisen kann.

Da der Schreib-/Lesestation die Sendeleistung der Sendeeinheit und die Empfangsempfindlichkeit der Sende-/Empfangsstation des Frequenzduplexsystems bekannt ist, die das Signal auf dem Rückkanal aussendet, kann die Schreib-/Lesestation die Streckendämpfung zwischen der Schreib-/Lesestation und der Sendevorrichtung des Frequenzduplexsystems aus der Differenz des vom Frequenzduplexsystems gesendeten Signalpegels und dem von der Schreib-/Lesestation empfangenen Signalpegel bestimmen und daraus bestimmen, ob sie aufgrund ihrer Sendeleistung und der von ihr ermittelten Streckendämpfung einen, eine Störung des Frequenzduplexsystems ausschließenden, räumlichen Mindestabstand zur Sende-/Empfangseinheit des Frequenzduplexsystems hat.

Vorteilhaft bei dem erfindungsgemäßen Verfahren ist, dass es mit einer Vielzahl von Schreib-/Lesestationen nach dem Stand der Technik ausgeführt werden kann, da die Schreib-/Lesestation lediglich einen Empfänger aufweisen muss, der Signale in einem Frequenzband empfangen kann, in dem die Schreib-/Lesestation selbst gerade nicht sendet.

Dazu weist die Schreib-/Lesestation einen Empfänger auf, der in der Lage ist, Signale im Rückband des Frequenzduplexsystems zu empfangen. Die Sende-/Empfangseinheit misst vor dem Betrieb des eigenen Senders im Rückband des Frequenzduplexsystems den Signalpegel mindestens einer Frequenz eines Rückkanales. Aus dem gemessenen Signalpegel ermittelt die Schreib-/Lesestation, ob ein Rückkanal des Frequenzduplexsystems belegt ist. Ermittelt die Schreib-/Lesestation, dass ein Rückkanal des Frequenzduplexsystems belegt ist, wird die Schreib-/Lesestation den dem Rückkanal zugeordneten Hinkanal des Frequenzduplexsystems nicht benutzen.

Ist die Belegung eines Rückkanales festgestellt worden und die RFID-Schreib-/Lesestation wählt den nächsten Kanal aus, so wird auch dieser Kanal mit dem erfindungsgemäßen Verfahren auf seine Belegung geprüft.

In einer bevorzugten Ausführungsform analysiert die Schreib-/Lesestation die Signalpegel von mindestens zwei oder von allen Rückkanälen des Frequenzduplexsystems gleichzeitig, bevor sie ihren Sendevorgang startet. Aus den gemessenen Signalpegeln der Rückkanäle kann die Schreib-/Lesestation dann besonders schnell einen geeigneten Sendekanal bestimmen. Aufgrund der Empfangspegelanalyse der Rückkanäle wählt die Schreib-/Lesestation ihren eigenen Sendekanal so aus, dass dieser entweder durch keinen Hinkanal des Frequenzduplexsystems belegt ist oder sie wählt einen Sendekanal, auf dem der Empfangspegel eines diesem zugeordneten Rückkanales unterhalb des definierten Schwellwertes liegt, der sich aus der Streckendämpfung, Sendeleistung und Empfängerempfindlichkeit ergibt.

In einer weiteren Ausführungsform analysiert die Schreib-/Lesestation mindestens zwei Rückkanäle des Frequenzduplexsystems sequenziell. Sequenzielle Analyse bedeutet, dass die Schreib-/Lesestation nacheinander Empfangspegel von Rückkanälen ermittelt und in der Sende-/Empfangseinheit zwischenspeichert. Ist die Ermittlung der relevanten Kanäle einmal durchlaufen, startet der sequenzielle Ablauf erneut. Diese Ausführungsform hat den Vorteil, dass sie mit einfachen oder schmalbandigen Empfangseinheiten ausgeführt werden kann.

In einer weiteren vorteilhaften Ausführungsform analysiert die Schreib-/Lesestation während des eigenen Sendevorganges den Signalpegel des Rückkanales, der dem Hinkanal zugeordnet ist, auf dem sie selbst gerade sendet. Dies hat den Vorteil, dass die Schreib-/Lesestation den Sendevorgang unmittelbar abbrechen kann, sobald sie erkennt, dass ihr eigener Sendekanal die Datenübertragung des Frequenzduplexsystems stören könnte.

Weitere Einzelheiten und Ausführungsformen der Erfindung werden anhand der nachfolgenden Figuren näher erläutert und beispielhaft beschrieben. In der Zeichnung zeigen:
- Fig. 1: eine schematische Anordnung mehrerer Sendeeinheiten gemäß dem Stand der Technik;
- Fig. 2: eine schematische Anordnung eines Frequenzduplexsystems und einer Schreib-/Lesestation;
- Fig. 3: eine schematische räumliche Anordnung eines Frequenzduplexsystems und einer Schreib-/Lesestation.

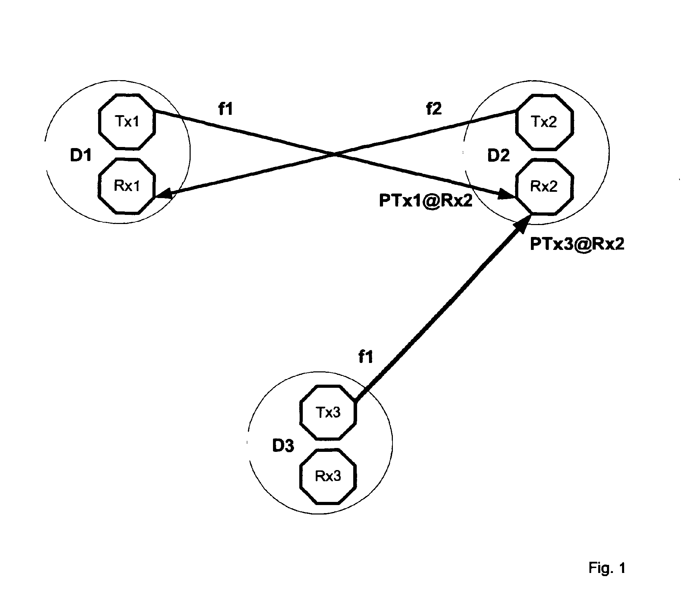

Fig. 1 stellt eine zum Stand der Technik zählende Anordnung dar, bei der ein Frequenzduplexsystem mit den Sende-/Empfangseinheiten D1 und D2 und eine Schreib-/Lesestation D3 eines RFID-Systems in räumlicher Nähe zueinander angeordnet sind. Die Schreib-/Lesestation D3 sendet dabei auf der Frequenz f1, die auch von der Sende-/Empfangseinheit D1 als Hinkanal verwendet wird, um Daten der Sendeeinheit Tx1 an die Empfangseinheit Rx2 zu übertragen.

Der Empfangspegel PTx1@Rx2, mit der das von der Sendeeinheit Tx1 emittierte Sendesignal von der Empfangseinheit Rx2 empfangen wird, ist dabei abhängig von der Sendeleistung der Sendeeinheit Tx1 und von der Entfernung zwischen der Sendeeinheit Tx1 und der Empfangseinheit Rx2 und der Empfindlichkeit des Empfängers Rx2.

Der Empfangspegel PTx3@Rx2, mit der das von der Sendeeinheit Tx3 emittierte Sendesignal von der Empfangseinheit Rx2 empfangen wird, ist abhängig von der Sendeleistung der Sendeeinheit Tx3 und von der Entfernung zwischen der Sendeeinheit Tx3 und der Empfangseinheit Rx2 und der Empfindlichkeit des Empfängers Rx2.

Die entfernungsabhängige Abnahme eines Empfangspegels wird dabei als Streckendämpfung bezeichnet. Je größer die Entfernung zwischen einer Sendeeinheit und einer Empfangseinheit ist, umso mehr nimmt der Empfangspegel an der Empfangseinheit ab. Das Signal wird über die überbrückte Strecke gedämpft.

Ist die Empfangsempfindlichkeit der Empfangseinheit Rx2 ein Wert S2 und die abgestrahlte Sendeleistung der Sendeeinheit Tx1 ein Wert T1, ergibt sich die Streckendämpfung zwischen der Sendevorrichtung von Tx1 und der Empfangsvorrichtung Rx2 aus der Subtraktion der Werte T1 minus S2.

Abhängig von dem räumlichen Abstand zwischen den Sende-/Empfangseinheiten D1 und D2 ändert sich der von der Empfangseinheit Rx2 empfangene Empfangspegel PTx1@Rx2 (gleichzusetzen mit einer Empfangsspannung). In Fig. 1 ist weiter zu sehen, dass durch die räumliche Nähe zwischen der Schreib-/Lesestation D3 und der Sende-/Empfangseinheit D2 ein Signal der Sendeeinheit Tx3 mit einem Signalpegel PTx3@Rx2 an der Empfangseinheit Rx2 anliegt.

Fig. 1 stellt damit das technische Problem dar, welches auftritt, wenn mehrere Sendeeinheiten auf der gleichen Frequenz arbeiten.

Einer der Empfangseinheiten Rx1, Rx2 des Frequenzduplexsystems, in diesem Fall die Empfangseinheit Rx2, empfängt Signale von zwei verschiedenen Sendeeinheiten und kann deshalb in bestimmten Fällen die Daten, die für den Empfänger bestimmt sind, nicht mehr empfangen.

Ob der in Fig. 1 dargestellte Empfänger Rx2 das Signal von Tx1 empfangen kann, hängt vom Signalpegel PTx1@Rx2 im Vergleich zum Signalpegel PTx3@Rx2 ab. In den typischen Fällen muss der Signalpegel PTx1@Rx2 des Nutzsignals um einen bestimmten Betrag größer sein als der Signalpegel des Störsignals PTx3@Rx2, damit der Empfänger Rx2 das Nutzsignal empfangen kann. Der Signalpegelunterschied, der zum Empfang der Daten von Tx1 an der Empfangseinheit Rx2 anliegen muss, hängt dabei unter anderem von der von Tx1 verwendeten Modulationsart und Art der Datenkodierung ab. Ob die Empfangseinheit Rx2 ein ausreichendes Nutzsignal empfangen kann, hängt von der Sendeleistung der Sendeeinheiten Tx1 und Tx3 und von dem räumlichen Abstand zwischen Tx1 und Rx2 und dem räumlichen Abstand zwischen Tx3 und Rx2 und damit von der Streckendämpfung des Signals auf dem Weg von Tx1 nach Rx2 und von der Streckendämpfung des Signals auf dem Weg von Tx3 nach Rx2 ab.

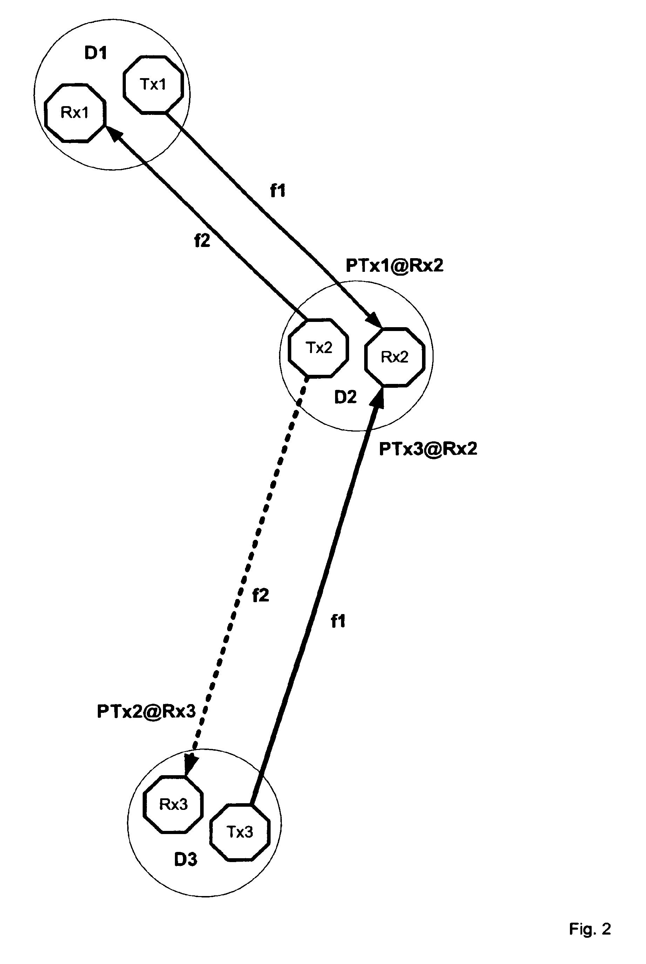

Fig. 2 zeigt eine Schreib-/Lesestation D3 eines RFID-Systems, einen Transponder D4 eines RFID-Systems und zwei Sende-/Empfangseinheiten D1 und D2 eines Frequenzduplexsystems. Die Sende-/Empfangseinheiten D1 und D2 kommunizieren miteinander über einen Hinkanal f1 und einen Rückkanal f2. Die Schreib-/Lesestation D3 würde mit dem Transponder D4 auf dem Kanal f1 kommunizieren. Da das RFID-System als Simplex-System aufgebaut ist, verwendet es für die Datenhin- und Rückübertragung lediglich einen Kanal. In diesem Fall Kanal f1. Die Schreib-/Lesestation D3 weist eine Empfangseinheit Rx3 auf, die in der Lage ist, eine Frequenz f2 und eine Frequenz f1 zu empfangen, wobei sich die Frequenz f2 von ihrer Sendefrequenz f1 unterscheidet. Die Empfangseinheit Rx3 empfängt das Signal einer Sendeeinheit Tx2 und misst dessen Signalpegel. Ist der gemessene Signalpegel höher als ein zuvor festgelegter Schwellwert, erkennt die Schreib-/Lesestation D3, dass sich die Sende-/Empfangseinheit D2 des Frequenzduplexsystems zu nahe an der Schreib-/ Lesestation D3 befindet. Das heißt, die Schreib-/Lesestation D3 darf die Frequenz f1 nicht benutzen, da sonst eine Störung der Empfangseinheit Rx2 der Sende-/Empfangseinheit D2 auftreten würde.

Um eine Störung der Empfangseinheit Rx2 durch die Sendeeinheit Tx3 zu vermeiden, ist es erforderlich, den räumlichen Abstand zwischen der Empfangseinheit Rx2 und der Sendeeinheit Tx3 so groß zu wählen, dass der Empfangspegel PTx3@Rx2 ausreichend klein ist, um die Empfangseinheit Rx2 nicht zu stören. Um einen ausreichenden räumlichen Abstand zu bestimmen, ist es erfindungsgemäß vorgesehen, dass die Empfangseinheit Rx3 der Schreib-/Lesestation D3 den Empfangspegel PTx2@Rx3 der von der Sendeeinheit Tx2 emittierten Frequenz f2 ermittelt. Detektiert die Schreib-/Lesestation D3 an ihrer Empfangseinheit Rx3 einen Empfangspegel PTx2@Rx3, der unter einem zuvor definierten Schwellwert liegt, kann sie bestimmen, ob und mit welcher Sendeleistung sie mit ihrer Sendeeinheit Tx3 auf der Frequenz f1 senden kann, ohne dabei die Empfangseinheit Rx2 zu stören, weil sie die Sendeleistung, mit der Tx2 sendet, kennt und aufgrund des Empfangspegels PTx2@Rx3 die Streckendämpfung zwischen D2 und D3 ermitteln kann.

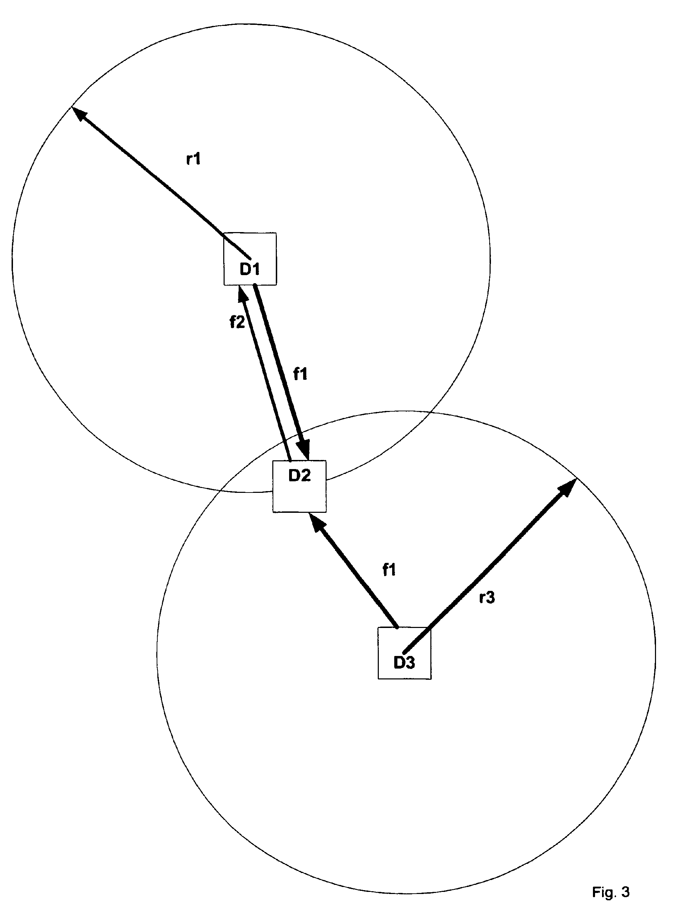

Fig. 3 zeigt eine abstrahierte mögliche räumliche Anordnung aus einer Schreib-/Lesestation D3, einem Transponder D4 und zwei Sende-/Empfangseinheiten D1 und D2 eines Frequenzduplexsystems. Die Sende-/Empfangseinheiten D1 und D2 verwenden die Frequenz f1 als Hinkanal, um Daten zur Sende-/Empfangseinheit D2 zu übertragen. Die Sende-/Empfangseinheit D2 liegt in diesem Beispiel auf dem Radius r1, der der maximalen, technisch sinnvoll auswertbaren Empfangsreichweite des von der Sende-/Empfangseinheit D1 emittierten Sendesignals entspricht, die als Sendereichweite bezeichnet wird. Die Schreib-/Lesestation D3, die ebenfalls auf der Frequenz f1 senden möchte, um mit dem Transponder D4 zu kommunizieren, liegt damit außerhalb der Sendereichweite der Sende-/Empfangseinheit D1. Der Radius r3 stellt die maximale Sendereichweite der Schreib-/Lesestation D3 dar. Bei dem in Fig. 3 dargestellten Beispiel kann die Sende-/Empfangseinheit D2 somit auch die von der Schreib-/Lesestation D3 gesendete Frequenz f1 empfangen, was ihre Kommunikation mit der Sende-/Empfangseinheit D1 stören würde.

Würde die Schreib-/Lesestation D3, so wie es aus dem Stand der Technik bekannt ist, den Empfangspegel der von der Sende-/Empfangseinheit D1 emittierten Frequenz f1 ermitteln, würde dieser unterhalb des Schwellwertes liegen, der eine Belegung des Kanales anzeigen würde, und sie würde ihren Sendebetrieb auf der Frequenz f1 starten, ohne dass sie feststellen könnte, dass sie die Kommunikation zwischen den Sende-/Empfangseinheiten D1 und D2 stört.

Dadurch, dass erfindungsgemäß vorgesehen ist, den Pegel des Rückkanales des Frequenzduplexsystems mit der Frequenz f2, der von der Sende-/Empfangseinheit D2 emittiert wird, zu analysieren, ist die Schreib-/Lesestation D3 in der Lage, die Sende-/Empfangseinheit D2 zu erkennen, die sie durch ihren eigenen Sendevorgang stören würde.

### Bezugszahlen

- D1: Sende-/Empfangseinheit
- D2: Sende-/Empfangseinheit
- D3: Schreib-/Lesestation
- D4: Transponder
- f1: Hinkanal
- f2: Rückkanal
- Rx1: Empfangseinheit
- Rx2: Empfangseinheit
- Rx3: Empfangseinheit
- Tx1: Sendeeinheit
- Tx2: Sendeeinheit
- Tx3: Sendeeinheit
- PTx1@Rx2: Signalpegel/Empfangspegel
- PTx3@Rx2: Signalpegel/Empfangspegel
- PTx2@Rx3: Signalpegel/Empfangspegel
- r1: Radius
- r3: Radius
- S2: Empfangsempfindlichkeit von Tx2
- T1: Sendeleistung von Tx1

## Patentansprüche

1. verfahren zum gleichzeitigen Betrieb einer Schreib-/Lesestation (D3) eines RFID-Systems und eines Frequenzduplexsystems (D1, D2) in demselben Frequenzband, wobei die Schreib-/Lesestation des RFID-Systems wenigstens eine Frequenz (f1) zur Kommunikation zwischen der Schreib-/Lesestation und wenigstens einem Transponder verwendet in Sendereichweite der RFID-Schreib-/Lesestation zu einer Sende-/ Empfangseinheit des Frequenzduplexsystems, welches wenigstens eine erste Frequenz (f1) und eine der ersten Frequenz (f1) in einem bekannten Duplexfrequenzabstand zugeordnete zweite Frequenz (f2) verwendet, und bei dem die Sendeleistung und die Empfangsempfindlichkeit der Sende-/Empfangseinheit bekannt ist, wobei die erste Frequenz (f1) als Hinkanal zur Datenübertragung von einer ersten Sende-/Empfangseinheit (D1) zu einer zweiten Sende-/Empfangseinheit (D2) und die zweite Frequenz (f2) als Rückkanal zur Datenübertragung von die zweiten Sende-/ Empfangseinheit zu der ersten Sende-/Empfangseinheit verwendet wird, wobei die Schreib-/Lesestation (D3) des RFID-Systems den Empfangspegel von wenigstens jeweils der zweiten Frequenz (f2) des Rückkanals des Frequenzduplexsystems auswertet für eine Überprüfung, ob das RFID-System die Frequenz (f1) des Hinkanals des Frequenzduplexsystems zur Kommunikation verwenden kann.

2. Verfahren nach Anspruch 1, **dadurch gekennzeichnet, dass** bei Ermittlung einer Belegung eines Rückkanales (f2) des Frequenzduplexsystems die Schreib-/Lesestation (D3) einen anderen auf seine Belegung geprüften oder auf seine Belegung zu prüfenden Kanal zur Kommunikation mit einem Transponder auswählt.

3. Verfahren nach Anspruch 1, **dadurch gekennzeichnet, dass** die Schreib-/Lesestation (D3) die Signalpegel oder Empfangspegel (PTx2@Rx3) von mindestens zwei oder von allen Rückkanälen (f2) des Frequenzduplexsystems gleichzeitig prüft.

4. Verfahren nach Anspruch 3, **dadurch gekennzeichnet, dass** die Schreib-/Lesestation (D3) aufgrund der Signalpegelanalyse oder Empfangspegelanalyse der Rückkanäle (f2) einen eigenen Sendekanal auswählt, derart, dass der Sendekanal durch keinen Hinkanal des Frequenzduplexsystems belegt ist.

5. Verfahren nach Anspruch 3, **dadurch gekennzeichnet, dass** die Schreib-/Lesestation (D3) aufgrund der Signalpegelanalyse oder Empfangspegelanalyse der Rückkanäle (f2) einen eigenen Sendekanal auswählt, auf dem der Empfangspegel eines diesem zugeordneten Rückkanales (f2) unterhalb eines zuvor definierten Schwellwertes liegt.

6. Verfahren nach Anspruch 1, **dadurch gekennzeichnet, dass** die Schreib-/Lesestation (D3) mindestens zwei Rückkanäle sequenziell analysiert.

7. Verfahren nach Anspruch 6, **dadurch gekennzeichnet, dass** die Schreib-/Lesestation (D3) den sequenziellen Ablauf der Analyse erneut startet, wenn die Schreib-/Lesestation (D3) die Kanäle ermittelt hat, auf denen sie kommunizieren oder weiterkommunizieren kann.

8. Verfahren nach einem der vorhergehenden Ansprüche, **dadurch gekennzeichnet, dass** die Schreib-/Lesestation (D3) eine Streckendämpfung zwischen der Schreib-/Lesestation (D3) und der Sendevorrichtung (D1, D2) des Frequenzduplexsystems aus der Differenz des vom Frequenzduplexsystem gesendeten Signalpegels und dem von der Schreib-/Lesestation (D3) empfangenen Signalpegel bestimmt.

9. Verfahren nach Anspruch 8, **dadurch gekennzeichnet, dass** die Schreib-/Lesestation (D3) aus der Streckendämpfung und aufgrund ihrer Sendeleistung bestimmt, ob sie einen eine Störung des Frequenzduplexsystems ausschließenden räumlichen Mindestabstand zur Sende-/Empfangseinheit (D1, D2) des Frequenzduplexsystems aufweist.

## Claims

1. Method for simultaneous operation of a read/write station (D3) of an RFID system and a frequency duplex system (D1, D2) in the same frequency band, wherein the read/write station of the RFID system uses at least one frequency (f1) for communication between the read/write station and at least one transponder in transmitting range of the RFID read/write station to a transmitting/receiving unit of the frequency duplex system, which uses at least one first frequency (f1) and a second frequency (f2) assigned to the first frequency (f1) at a known duplex frequency spacing, and in which the transmitting power and the receiving sensitivity of the transmitting/receiving unit is known, wherein the first frequency (f1) is used as a forward channel for data transmission from a first transmitting/receiving unit (D1) to a second transmitting/receiving unit (D2) and the second frequency (f2) is used as a backward channel for data transmission from the second transmitting/receiving unit to the first transmitting/receiving unit, wherein the read/write station (D3) of the RFID system evaluates the receiving level of at least in each case the second frequency (f2) of the backward channel of the frequency duplex system for checking whether the RFID system can use the frequency (f1) of the forward channel of the frequency duplex system for communication.

2. Method according to Claim 1, **characterised in that**, when determining an occupation of a backward channel (f2) of the frequency duplex system, the read/write station (D3) selects another channel, checked for its occupation or to be checked for its occupation, for communication with a transponder.

3. Method according to Claim 1, **characterised in that** the read/write station (D3) simultaneously checks the signal levels or receiving levels (PTx2@Rx3) of at least two or of all backward channels (f2) of the frequency duplex system.

4. Method according to Claim 3, **characterised in that** the read/write station (D3) selects a dedicated transmitting channel based on the signal level analysis or receiving level analysis of the backward channels (f2), in such a manner that the transmitting channel is not occupied by any forward channel of the frequency duplex system.

5. Method according to Claim 3, **characterised in that** the read/write station (D3) selects a dedicated transmitting channel based on the signal level analysis or receiving level analysis of the backward channels (f2), on which transmitting channel the receiving level of a backward channel (f2) assigned to this transmitting channel lies below a previously defined threshold value.

6. Method according to Claim 1, **characterised in that** the read/write station (D3) sequentially analyses at least two backward channels.

7. Method according to Claim 6, **characterised in that** the read/write station (D3) restarts the sequential execution of the analysis when the read/write station (D3) has determined the channels on which it can communicate or continue to communicate.

8. Method according to one of the preceding claims, **characterised in that** the read/write station (D3) determines a path attenuation between the read/write station (D3) and the transmitting device (D1, D2) of the frequency duplex system from the difference of the signal level transmitted by the frequency duplex system and the signal level received by the read/write station (D3).

9. Method according to Claim 8, **characterised in that** the read/write station (D3) determines from the path attenuation and based on its transmitting power whether it has a minimum spatial distance, which eliminates interference of the frequency duplex system, from the transmitting/receiving unit (D1, D2) of the frequency duplex system.

## Revendications

1. Procédé pour le fonctionnement simultané d'un poste d'écriture/lecture (D3) d'un système RFID et d'un système de duplexage de fréquence (D1, D2) dans la même bande de fréquence, le poste d'écriture/lecture du système RFID utilisant, pour la communication entre le poste d'écriture/lecture et au moins un transpondeur, au moins une fréquence (f1) dans la portée d'émission du poste d'écriture/lecture RFID vers une unité d'émission/réception du système de duplexage de fréquence, qui utilise au moins une première fréquence (f1) et une deuxième fréquence (f2) associée à la première fréquence (f1) dans un écartement connu des fréquences duplex, et dans lequel la puissance d'émission et la sensibilité de réception de l'unité d'émission/réception sont connues, la première fréquence (f1) étant utilisée en tant que canal aller pour la transmission des données depuis une première unité d'émission/réception (D1) vers une deuxième unité d'émission/réception (D2), et la deuxième fréquence (f2) étant utilisée en tant que canal retour pour la transmission des données depuis la deuxième unité d'émission/réception vers la première unité d'émission/réception, le poste d'écriture/lecture (D3) du système RFID analysant le niveau de réception dans chaque cas pour au moins la deuxième fréquence (f2) du canal retour du système de duplexage de fréquence, afin d'examiner si le système RFID peut utiliser la fréquence (f1) du canal aller du système de duplexage de fréquence pour la communication.

2. Procédé selon la revendication 1, **caractérisé en ce que**, au moment de l'évaluation de l'occupation d'un canal retour (f2) du système de duplexage de fréquence, le poste d'écriture/lecture (D3) sélectionne pour la communication avec un transpondeur un autre canal, dont l'occupation a été examinée ou dont l'occupation est à examiner.

3. Procédé selon la revendication 1, **caractérisé en ce que** le poste d'écriture/lecture (D3) examine simultanément les niveaux des signaux ou les niveaux de réception (PTx2@Rx3) d'au moins deux ou de tous les canaux retour (f2) du système de duplexage de fréquence.

4. Procédé selon la revendication 3, **caractérisé en ce que**, compte tenu de l'analyse des niveaux des signaux ou de l'analyse des niveaux de réception des canaux retour (f2), le poste d'écriture/lecture (D3) sélectionne son propre canal d'émission, de telle sorte que le canal d'émission n'est pas occupé par un canal aller du système de duplexage de fréquence.

5. Procédé selon la revendication 3, **caractérisé en ce que**, compte tenu de l'analyse des niveaux des signaux ou de l'analyse des niveaux de réception des canaux retour (f2), le poste d'écriture/lecture (D3) sélectionne son propre canal d'émission, sur lequel le niveau de réception d'un canal retour (f2) associé à celui-ci se situe au-dessous d'une valeur seuil précédemment définie.

6. Procédé selon la revendication 1, **caractérisé en ce que** le poste d'écriture/lecture (D3) analyse séquentiellement au moins deux canaux retour.

7. Procédé selon la revendication 6, **caractérisé en ce que** le poste d'écriture/lecture (D3) redémarre le déroulement séquentiel de l'analyse lorsque le poste d'écriture/lecture (D3) a déterminé les canaux sur lesquels il communique ou peut continuer à communiquer.

8. Procédé selon l'une quelconque des revendications précédentes, **caractérisé en ce que**, à partir de la différence entre le niveau des signaux émis par le système de duplexage de fréquence et le niveau des signaux reçus par le poste d'écriture/lecture (D3), le poste d'écriture/lecture (D3) détermine une atténuation sur le trajet entre le poste d'écriture/lecture (D3) et le dispositif d'émission (D1, D2) du système de duplexage de fréquence.

9. Procédé selon la revendication 8, **caractérisé en ce que** le poste d'écriture/lecture (D3), à partir de l'atténuation sur ledit trajet et compte tenu de sa puissance d'émission, détermine s'il est situé par rapport à l'unité d'émission/réception (D1, D2) du système de duplexage de fréquence à une distance physique minimum excluant un dysfonctionnement du système de duplexage de fréquence.
